# EUROPÄISCHE PATENTSCHRIFT

(11) **EP 3 420 422 B1**
(45) Veröffentlichungstag und Bekanntmachung des Hinweises auf die Patenterteilung: **30.09.2020**
(21) Anmeldenummer: 17708707.9
(22) Anmeldetag: 21.02.2017
(51) Int. Cl.: G05B 19/409

(54) **BEDIENGERÄT FÜR EINEN MANIPULATOR**
OPERATING DEVICE FOR A MANIPULATOR
APPAREIL DE COMMANDE POUR UN MANIPULATEUR

(30) Priorität: 24.02.2016 DE 102016202881
(43) Veröffentlichungstag der Anmeldung: 02.01.2019
(73) Patentinhaber: KUKA Deutschland GmbH, 86165 Augsburg (DE)
(72) Erfinder: RIEDEL, Martin, 86165 Augsburg (DE)
(74) Vertreter: Tillmann, Axel
(86) Internationale Anmeldenummer: PCT/EP2017/053835
(87) Internationale Veröffentlichungsnummer: WO 2017/144431

(56) Entgegenhaltungen:
- DE-A1-102004 060 484
- US-A- 4 888 708
- US-B1- 9 086 757
- US-B2- 7 403 837
- Anonymous: "MOTOMAN INSTRUCTIONS MOTOMAN- JRC BEGINNER'S GUIDE JRC SETTING-UP MANUAL", , 1. April 2001 (2001-04-01), Seiten 1-156, XP055366806, Gefunden im Internet: URL:http://services.eng.uts.edu.au/~carlo/ new-robot/pdf/Begginers.pdf [gefunden am 2017-04-24]

## Beschreibung

### 1. Technischer Bereich

Die vorliegende Erfindung betrifft ein Verfahren zum Signalisieren von Manipulator-Informationen.

### 2. Technischer Hintergrund

Manipulatoren, und insbesondere Roboter, sind universell einsetzbare, freiprogrammierbare Handhabungsgeräte. Ein Manipulator kann dabei mehrere Achsen umfassen, die unabhängig voneinander durch entsprechende Antriebe (beispielsweise Servomotoren) bewegbar sind. Dadurch kann der Manipulator verschiedene Posen bzw. verschiedene Konfigurationen einnehmen, um beispielsweise ein Werkzeug oder Werkstück an eine bestimmte Position im Raum zu bewegen. Ein Manipulator kann hierbei mehrerer Freiheitsgrade in seiner Bewegung aufweisen. Diese können die Anzahl von voneinander unabhängigen, angetriebenen Bewegungen beschreiben, die der Manipulator im Raum gegenüber einem festen Weltkoordinatensystem ausführen kann. Die Beweglichkeit des Manipulators kann somit generell durch die Anzahl seiner Freiheitsgrade charakterisiert werden.

Ein Manipulator kann einem automatischen Programmablauf folgen. Dieser kann auf einem zuvor programmierten Programmablauf basieren, welcher einer entsprechenden Steuerung bereitgestellt wird. Dieser Programmablauf kann die einzelnen Bahnpunkte beschreiben, die durch den Manipulator ab- bzw. angefahren werden sollen. Weiterhin ist auch ein manueller Betrieb des Manipulators möglich, bei dem der Bediener die Bewegung des Manipulators manuell vorgibt, den Manipulator somit manuell verfährt.

Die Bewegung eines Manipulators kann mittels eines Bediengeräts manuell vorgegeben werden. Das Bediengerät kann dabei beispielsweise in Form eines Handbediengeräts ausgestaltet sein, welches von einem Bediener per Hand bedient wird. Solche Handbediengeräte kommunizieren dabei drahtgebunden oder drahtlos mit der Steuerung des Manipulators und stellen somit eine Schnittstelle zwischen dem Bediener und der Steuerung des Manipulators dar. Mit dem Handbediengerät kann beispielsweise eine einzelne Achse des Manipulators bewegt werden, oder eine Bewegung des Werkzeugmittelpunktes des Manipulators direkt vorgegeben werden.

Das Handbediengerät kann hierzu verschiedene Eingabevorrichtungen aufweisen, wie beispielsweise einzelne Drehräder oder Tasten, um eine lineare Bewegung oder Rotation vorzugeben. Es ist ferner bekannt, einen Joystick zur Eingabe der Steuerbefehle bereitzustellen. Ein wesentlicher Nachteil eines solchen Joysticks ist jedoch die fehlende Ausrichtung. Ein Bediener kann nur schwer erkennen, wie das Bezugssystem des Joysticks mit dem aktuellen Koordinatensystem des Manipulators verknüpft ist. Wenn beispielsweise der Joystick nach vorne betätigt wird, könnte der Manipulator ungewollt seitlich verfahren. Dies gilt insbesondere, wenn das Handbediengerät mit unterschiedlichen Orientierungen gehalten wird, oder auch die Haltehand bzw. der Bediener gewechselt wird. Es kann zwar eine feste Markierung an dem Handbediengerät angebracht sein, um die Ausrichtung erkennen zu lassen, jedoch kann diese situationsbedingt unpraktisch sein.

Aus der DE 10 2004 060 484 A1 ist eine Vorrichtung und ein Verfahren zur Steuerung von Maschinen insbesondere von Kränen bekannt. Die Steuereinrichtung umfasst eine dynamische Zuweisung von Funktionen zur Bewegungssteuerung in Abhängigkeit der relativen Position und Orientierung der mobilen Steuereinrichtung zur steuernden Maschine. Eine besonders intuitive Steuerung und insbesondere eine Darstellung von Winkeln sind jedoch nicht möglich.

Die US4888708 A beschreibt eine Steuervorrichtung für einen Industrieroboter mit einer Steuerung mit einem Steuerkreuz und einer balkenförmigen Informationsanzeige. Ferner ist aus der US7403837B2 eine tragbare Vorrichtung zur Visualisierung von Prozessdaten einer Maschine bekannt.

Die US 7 403 837 B2 zeigt eine tragebare Vorrichtung zur Visualisierung von Maschinenprozessen. Die tragbare Vorrichtung umfasst dabei eine Eingabevorrichtung und ein berührungsempfindliches Display, welches unterhalb der Eingabevorrichtung angeordnet ist.

Es ist somit eine Aufgabe der vorliegenden Erfindung, ein Bediengerät für einen Manipulator bereitzustellen, welches die oben genannten Nachteile zumindest teilweise ausräumt. Dabei soll insbesondere ein Bediengerät bereitgestellt werden, welches die Bedienung eines Manipulators deutlich vereinfacht, indem es ein intuitives Bedienen ermöglicht.

Diese und weitere Aufgaben, die aus der folgenden Beschreibung ersichtlich werden, werden durch ein Verfahren gemäß Anspruch 1 gelöst.

### 3. Inhalt der Erfindung

Die vorliegende Erfindung betrifft ein Bediengerät für einen Manipulator. Das Bediengerät eignet sich dabei insbesondere zum Steuern oder Programmieren eines Manipulators. Das Bediengerät kann manuell durch einen Bediener bedient werden. So kann das Bediengerät beispielsweise händisch durch den Bediener betätigt werden. Mittels des Bediengeräts kann die Bewegung des Manipulators direkt vorgegeben werden, oder Bewegungen für einen Programmablauf definiert werden. Das Bediengerät kann somit die Steuerung des Manipulators ermöglichen oder unterstützen, aber auch für die Erstellung von Programmabläufen verwendet werden. Hierzu kann das Bediengerät in Kommunikation mit einer entsprechenden Steuerung des Manipulators stehen, und Bewegungsvorgaben des Bedieners an die Steuerung übertragen, sodass diese Vorgaben anschließend von der Steuerung umgesetzt werden können.

Prinzipiell kann der Manipulator beliebig ausgestaltet sein. Der Manipulator kann dabei vorzugsweise mehrere voneinander unabhängige Freiheitsgrade aufweisen. Beispielsweise kann der Manipulator in einer zweidimensionalen Ebene bewegt werden. Somit kann der Manipulator als mobile Plattform ausgestaltet sein, welche ferngesteuert mittels des Bediengeräts bewegt werden kann. Ferner kann der Manipulator auch als Gelenkarmroboter ausgebildet sein, wobei mittels des Bediengeräts die Bewegung des Werkzeugmittelpunktes vorgegeben werden kann. Das Bediengerät umfasst einen Handsteuerhebel, welcher eingerichtet ist, um zumindest eine zweidimensionale Bewegung des Manipulators vorzugeben. Der Handsteuerhebel ist hierbei per Hand durch den Bediener betätigbar. Der Handsteuerhebel kann dabei auslenkbar sein, um eine gewünschte Bewegung vorzugeben. Verschiedene Auslenkrichtungen können dabei verschiedenen Bewegungsrichtungen entsprechen. Durch Ändern des Winkels der Auslenkung des Handsteuerhebels kann somit die Bewegungsrichtung geändert werden. Neben solchen Auslenkungen kann der Handsteuerhebel vorzugsweise auch rotiert werden, oder auch durch Drücken und Ziehen betätigt werden. Beispielsweise kann der Handsteuerhebel in Form eines Steuerhebels oder eines Joysticks ausgebildet sein. Vorzugsweise ist der Handsteuerhebel als 2D-, 3D- oder 6D-Joystick ausgebildet. Ein 6D-Joystick kann dabei eine Bewegung des Manipulators in sechs Freiheitsgraden vorgeben (beispielsweise hinsichtlich drei translatorischen und drei rotatorischen Freiheitsgrade der Bewegung). Beispielsweise kann der Joystick in Form einer Handsteuerkugel bzw. Spacemouse ausgebildet sein. Beispielsweise können mittels des Handsteuerhebels folgende Eingabebewegungen durchgeführt werden: Eine Auslenkung in die x-Richtung (z.B. durch Verschieben oder Verkippen des Handsteuerhebels in eine erste x-Richtung), eine Auslenkung in die y-Richtung (z.B. durch Verschieben oder Verkippen des Handsteuerhebels in eine zweite y-Richtung), eine Auslenkung um eine Drehachse (z.B. durch Verdrehen des Handsteuerhebels um die Vertikalachse, welche orthogonal zu der ersten x- und zweiten y-Richtung steht).

Weiterhin umfasst das Bediengerät eine Informationsanzeige, welche dem Handsteuerhebel zugeordnet ist. Die Informationsanzeige kann somit derart an dem Bediengerät bereitgestellt sein, dass ein Bediener die Informationsanzeige mit dem Handsteuerhebel direkt verknüpft oder assoziiert. Beispielsweise kann die Informationsanzeige in direkter Nähe zu dem Handsteuerhebel angeordnet sein. Die Informationsanzeige ist dabei eingerichtet, um Manipulator-Information visuell an einen Bediener des Bediengeräts zu signalisieren. Generell kann die Informationsanzeige ein Display oder eine Leuchte umfassen. Insbesondere umfasst die Informationsanzeige mehrere unabhängig voneinander ansteuerbare Anzeigesegmente, wie beispielsweise mehrere Leuchten. Diese Anzeigesegmente können dabei gezielt angesteuert werden, um das Signalisieren zu ermöglichen bzw. umzusetzen. Die Anzeigesegmente umgeben den Handsteuerhebel dabei zumindest teilweise. Beispielsweise können die Anzeigesegmente auf unterschiedlichen Seiten des Handsteuerhebels bereitgestellt sein. Die Anzeigesegmente können einzelne LEDs sein, welche sichtbares Licht verschiedener Wellenlängen (z.B. rot oder grün) aussenden können. Dabei können vorzugsweise durch gezieltes Ansteuern die einzelnen Anzeigesegmente in verschiedenen Farben leuchten.

Ferner weist das Bediengerät eine Steuereinrichtung auf, die eingerichtet ist, um die Anzeigesegmente der Informationsanzeige einzeln anzusteuern, um die Manipulator-Information zu signalisieren. Die Steuereinrichtung kann dabei ferner in Kommunikation mit einer Steuerung des Manipulators stehen, um Manipulator-Information von der Steuerung zu erhalten, oder um die Bewegungsvorgabe an die Steuerung des Manipulators zu übertragen. Dies erfolgt vorzugsweise mittels Funktechnologie.

Das Bediengerät zeichnet sich somit durch eine benutzerfreundliche und intuitive Bedienung aus, insbesondere da dem Bediener die Manipulator-Information intuitiv signalisiert wird. Dies wird insbesondere durch die Informationsanzeige ermöglicht, die dem Handsteuerhebel zugeordnet ist. Da die Anzeigesegmente, die unabhängig voneinander ansteuerbar sind, den Handsteuerhebel zumindest teilweise umgeben, kann beispielsweise eine bestimmte Auslenkrichtung des Handsteuerhebels hervorgehoben werden, indem das entsprechende Anzeigesegment, welches in der Auslenkrichtung des Handsteuerhebels liegt, entsprechend angesteuert wird. Beispielsweise kann somit dem Bediener intuitiv signalisiert werden, welche Auslenkrichtung des Handsteuerhebels der x-Bewegungsachse des Manipulators entspricht. In einem anderen Beispiel kann die Auslenkrichtung auch direkt mittels des Handsteuerhebels vorgegeben werden. Zum Vorgeben der Richtung kann ein Schieben des Handsteuerhebels in die gewünschte Richtung erfolgen, oder auch ein Verdrehen des Handsteuerhebels um die Hochachse. Auch bei einem Wechsel des Koordinatensystems, beispielsweise beim Umschalten zwischen dem Roboterfuß-, Welt-, Basis-, Flansch- oder Werkzeugkoordinatensystem, kann durch Ansteuern der entsprechenden Anzeigesegmente die entsprechende Auslenkrichtung des Handsteuerhebels hervorgehoben werden, und somit die entsprechende x-Achse dem Bediener signalisiert werden. Somit kennt der Bediener immer die eindeutige Zuordnung der Koordinatenrichtungen des Bediengeräts und des Manipulators.

Vorzugsweise sind die Anzeigesegmente gleichförmig. Somit kann jedes Anzeigesegment, das den Handsteuerhebel zumindest teilweise umgibt, dieselbe Form haben. Ferner sind die Anzeigesegmente vorzugsweise gleichmäßig um den Handsteuerhebel herum bereitgestellt. Beispielsweise kann in jeder der vier Hauptauslenkrichtungen des Handsteuerhebels (vor, zurück, links, rechts) ein solches Anzeigesegment bereitgestellt sein. Somit kann der Bediener direkt die Anzeigesegmente mit einer Auslenkrichtung des Handsteuerhebels assoziieren.

Vorzugsweise umgeben die Anzeigesegmente den Handsteuerhebel an zumindest drei Seiten. Somit kann Information signalisiert werden, welche mit den entsprechenden Auslenkrichtungen des Handsteuerhebels assoziiert und verknüpft werden können, die diesen drei Seiten (z.B. links, vor, rechts) entsprechen.

Vorzugsweise umgibt die Informationsanzeige den Handsteuerhebel ringförmig. Die Anzeigesegmente können somit auf einer Ringform um den Handsteuerhebel herum angeordnet sein. Dies ermöglicht eine eindeutige Zuordnung der Auslenkrichtungen des Handsteuerhebels und der signalisierten Information. Prinzipiell sind auch ringähnliche Strukturen möglich, jedoch ist eine Ringform bevorzugt um ein leichteres assoziieren der einzelnen Anzeigesegmente mit dem Handsteuerhebel zu ermöglichen.

Vorzugsweise umfasst die Informationsanzeige einen segmentierten Leuchtrings, wobei dieser Leuchtring die mehreren Anzeigesegmente umfasst. Insbesondere vorzugsweise liegt die Informationsanzeige in Form des segmentierten Leuchtrings vor. Dieser Leuchtring kann beispielsweise in feinsegmentierten Abschnitten gezielt angesteuert werden, um die Information zu signalisieren. Dabei kann zusätzlich auch ein weiterer Lichtring als Ambiente-Lichtring eingesetzt werden, welcher ebenfalls zur Signalisierung der Information eingesetzt werden kann. Die feinsegmentierten Anzeigesegmente des Leuchtrings können durch eine Vielzahl von kleinen LCDs gebildet sein. Durch eine gezielte Änderung ihrer Lichtdurchlässigkeit, zum Beispiel, kann die Manipulator-Information gezielt signalisiert werden.

Vorzugsweise umgeben die Anzeigesegmente den Handsteuerhebel kontinuierlich. Die Anzeigesegmente können somit lückenlos um den Handsteuerhebel bereitgestellt sein, sodass jede zweidimensionale Auslenkrichtung des Handsteuerhebels durch die Informationsanzeige gezielt gekennzeichnet werden kann. Der Fachmann versteht, dass die Anzeigesegmente aufgrund ihres Aufbaus nicht perfekt lückenlos nebeneinander bereitgestellt sein müssen. Jedoch grenzen die Anzeigesegmente vorzugsweise im Wesentlichen oder bestmöglich aneinander an, um den Handsteuerhebel beispielsweise ringförmig zu umgeben.

Vorzugsweise ist das Bediengerät als eine 2D-, 3D- oder 6D-Maus ausgebildet. Dabei kann der Handsteuerhebel als Joystick insbesondere vorzugsweise als Kappen- oder Ball-Joystick ausgebildet sein. Hierzu kann der Bediener das Bediengerät mit einer Hand festhalten und mit der anderen Hand den Handsteuerhebel kippen, drehen, schieben, ziehen, drücken und/oder rotieren, u.a., um eine gewünschte Bewegung vorzugeben. Der Handsteuerhebel kann dabei als zentrales Element auf dem Bediengerät platziert sein. Durch die Anordnung der Anzeigesegmente um den Handsteuerhebel können die möglichen Auslenkrichtungen des Handsteuerhebels mit Information gekennzeichnet werden und vom Bediener dementsprechend assoziiert werden.

Vorzugsweise umfasst die Informationsanzeige zumindest vier, weiter vorzugsweise zumindest 8, weiter vorzugsweise zumindest 16, weiter vorzugsweise zumindest 32, weiter vorzugsweise zumindest 64 und am meisten bevorzugt zumindest 100 Anzeigesegmente. Somit kann, je nach Verwendung, die Manipulator-Information beliebig fein signalisiert werden.

Vorzugsweise weist das Bediengerät ferner einen Lagesensor und/oder einen Orientierungssensor auf. Somit kann eine Lage und/oder Orientierung des Bediengeräts ermittelt werden. Auch kann ein Intertialsensor bereitgestellt sein. Dabei ist die Steuereinrichtung vorzugsweise weiter eingerichtet, um die Anzeigesegmente der Informationsanzeige unter Berücksichtigung der ermittelten Lage und/oder ermittelten Orientierung des Bediengeräts anzusteuern. Es kann somit festgestellt werden, wie der Bediener das Bediengerät im Raum hält, und basierend hierauf die Manipulator-Information entsprechend signalisiert werden. Wenn beispielsweise die Auslenkung des Handsteuerhebels direkt mit der Auslenkung des Manipulators verknüpft ist, die Bewegung des Manipulators somit in dieselbe Richtung erfolgen soll wie die Auslenkungsrichtung des Handsteuerhebels, kann beispielsweise mittels der Anzeigesegmente signalisiert werden, in welche Bereiche der Handsteuerhebel nicht ausgelenkt werden soll, um mögliche Kollisionen zu verhindern. Insbesondere wenn der Manipulator als mobile Plattform ausgestaltet ist, kann hierdurch das Kollisionsrisiko verringert werden.

Vorzugsweise ist um den Handsteuerhebel herum ein Eingabering bereitgestellt. Dieser ist dabei drehbar betätigbar eingerichtet, um eine Benutzereingabe zu erfassen. Der Eingabering kann als "Jog-Rad" bzw. "Jog-Wheel" ausgestaltet sein. Der Eingabering kann dabei kontinuierlich oder schrittweise durch eine Rasterung betätigbar eingerichtet sein, um beispielsweise eine Menüeingabe zu erfassen oder um es dem Bediener zu erlauben, eine Bewegungsvorgabe zu tätigen. Durch die Anordnung des Eingaberings mit dem Handsteuerhebel und insbesondere mit der Informationsanzeige kann somit eine intuitive Bedienung ermöglicht werden.

Die vorliegende Erfindung betrifft ferner ein Manipulatorsystem, aufweisend einen Manipulator mit mehreren voneinander unabhängigen Freiheitsgraden, und ein Bediengerät zum Steuern oder Programmieren des Manipulators gemäß der vorliegenden Erfindung. Das Bediengerät kann dabei mit einer entsprechenden Steuerung des Manipulators kommunizieren. Diese Kommunikation kann drahtgebunden oder drahtlos erfolgen, und die Steuerung kann an dem Manipulator oder separat hierzu bereitgestellt sein.

Weiterhin betrifft die vorliegende Erfindung ein Verfahren zum Signalisieren von Manipulator-Information an einen Bediener eines Bediengeräts gemäß der Erfindung. Das Verfahren umfasst dabei ein Bereitstellen der Manipulator-Information, welche visuell an den Bediener des Bediengeräts zu signalisieren ist. Beispielsweise kann die Manipulator-Information von einer Steuerung des Manipulators an die Steuereinrichtung des Bediengeräts bereitgestellt werden. Ferner umfasst das Verfahren ein Ansteuern der Anzeigesegmente der Informationsanzeige, um die Manipulator-Information visuell zu signalisieren. Dieses Ansteuern kann mittels der Steuereinrichtung des Bediengeräts erfolgen.

Vorzugsweise beschreibt die Manipulator-Information eine Richtung einer Koordinatenachse des Manipulators. Das Ansteuern der Anzeigesegmente erfolgt dann vorzugsweise derart, dass die Richtung der Koordinatenachse an den Bediener signalisiert wird. Beispielsweise kann ein Anzeigesegment angesteuert werden, so dass der Bediener die entsprechende Auslenkrichtung des Handsteuerhebels mit der Koordinatenachsenrichtung des Manipulators assoziiert. Vorzugsweise kann der Bediener durch Bedienung des Handsteuerhebels die Richtung der Koordinatenachse des Manipulators steuern bzw. ändern. Somit kann beispielsweise durch den Bediener festgelegt werden, welche Auslenkrichtung des Handsteuerhebels mit der x-Koordinatenachsrichtung verknüpft werden soll.

Vorzugsweise beschreibt die Manipulator-Information einen aktuellen Winkel einer Achse bzw. ausgewählten Achse des Manipulators und einen oder mehrere Grenzwinkel dieser Achse. Vorzugsweise erfolgt das Ansteuern der Anzeigesegmente dann derart, dass dem Bediener der aktuelle Winkel der Achse und ein zulässiger und unzulässiger Winkelbereich der Achse signalisiert werden. Beispielsweise kann der Bediener somit direkt erkennen, wie weit ein aktueller Achswinkel des Manipulators von einem entsprechenden Achsgrenzwert entfernt ist. Durch Bedienung des Handsteuerhebels kann der Bediener vorzugsweise den aktuellen Winkel der Achse des Manipulators steuern bzw. ändern. Beispielsweise kann durch eine Rotation des Handsteuerhebels der aktuelle Winkel der Achse direkt vorgegeben werden. Durch das visuelle Signalisieren des aktuellen Achswerts und der Grenzwerte kann der Bediener direkt erkennen, unzulässige Bereiche zu vermeiden. Diese Bereiche sowie der aktuelle Winkel sind dabei abhängig von der gewählten Achse.

Vorzugsweise beschreibt die Manipulator-Information eine aktuelle Ausrichtung bzw. Orientierung des Manipulators und ein Hindernis in der Umgebung des Manipulators. Beispielsweise kann die aktuelle Vorwärtsrichtung eines mobilen Manipulators angezeigt werden, als auch die relative Position möglicher Hindernisse in Bezug auf diese Vorwärtsrichtung. Diese Anzeige der aktuellen Ausrichtung kann dabei relativ zu einer aktuellen Auslenkung des Handsteuerhebels erfolgen. Das Ansteuern der Anzeigesegmente erfolgt vorzugsweise derart, dass dem Bediener die aktuelle Ausrichtung des Manipulators und ein durch das Hindernis belegter bzw. blockierter Bereich signalisiert werden. Vorzugsweise kann auch eine Entfernung des Manipulators zu dem Hindernis mittels der Anzeigesegmente signalisiert werden. Vorzugsweise kann der Bediener durch Bedienung des Handsteuerhebels die aktuelle Ausrichtung des Manipulators steuern bzw. ändern. Dabei erkennt der Bediener direkt, wie die aktuelle Ausrichtung des Manipulators vorzugeben ist, um mögliche Kollisionen zu vermeiden. Die Ausrichtung kann dabei die Bewegungsrichtung des Manipulators umfassen. Mittels des Bediengeräts kann der Bediener somit direkt die Fahrtrichtung steuern, um Kollisionen zu vermeiden.

Die Manipulator-Information kann jede Information beschreiben, die mit dem Manipulator in Zusammenhang steht. Dabei kann die Manipulator-Information insbesondere vorzugsweise zumindest eines der folgenden umfassen oder beschreiben: Örtliche und/oder zeitliche Information zu der zweidimensionalen Bewegung des Manipulators (z.B. vorgegebene Bewegungsrichtung des Werkzeugmittelpunktes), örtliche und/oder zeitliche Information zu einer Achskonfiguration des Manipulators (z.B. aktueller Achswinkel), Information zu einem Parameterwert und/oder einem Parameterlimit des Manipulators (z.B. Geschwindigkeitslimit einer Achsbewegung), Information zu dem Koordinaten- oder Bezugssystem des Manipulators (z.B. Verknüpfung Auslenkrichtung des Bediengeräts und x-Achsenrichtung des Manipulators), Information zu einer Achsgrenze des Manipulators (z.B. maximaler Achswinkel), Umgebungsinformation zu dem Manipulator (z.B. relative Position von Hindernissen), Information zu einem Zustand des Manipulators (z.B. Temperatur, Statusinfo, Fehlerzustand, etc.). Ferner kann die Manipulator-Information einen Koppelzustand zwischen dem Manipulator und dem Bediengerät beschreiben. Der Fachmann versteht, dass diese Aufzählung nicht abschließend ist, und je nach Verwendung unterschiedliche Manipulator-Information mittels der Anzeigesegmente signalisiert werden kann. Der Fachmann versteht, dass mittels der Informationsanzeige auch Informationen hinsichtlich der Funktion bzw. des Status des Bediengeräts (z.B. Akkuzustand, Funkverbindungsqualität, Notausschalter-Status, Menümodus des Bediengeräts, etc.) an den Bediener signalisiert werden können.

### 4. Beschreibung bevorzugter Ausführungsformen

Im Folgenden wird die vorliegende Erfindung unter Bezugnahme auf die beiliegenden Figuren näher beschrieben. Gleiche Komponenten sind hier mit gleichen Bezugszeichen gekennzeichnet. Dabei zeigt:
Figur 1 ein Manipulatorsystem gemäß einer Ausführungsform;
Figuren 2-11 ein Bediengerät gemäß weiterer Ausführungsformen, und
Figur 12 ein Bediengerät gemäß einer weiteren Ausführungsform.

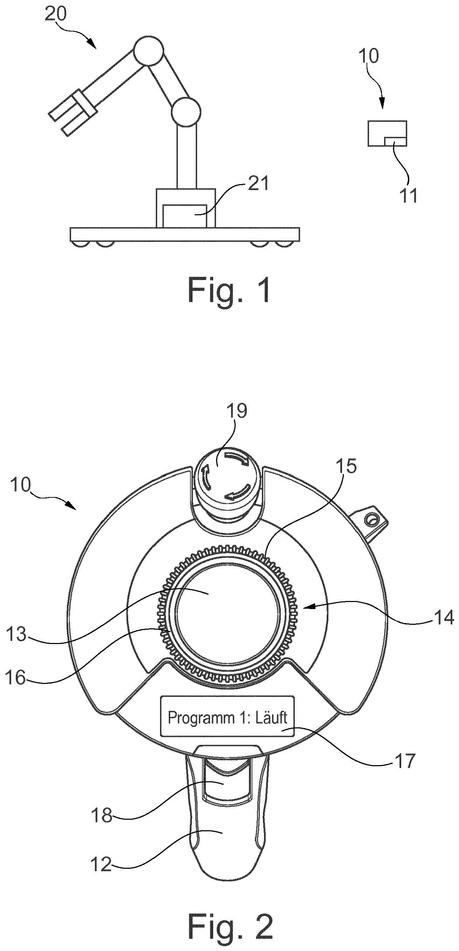

In der Figur 1 ist ein Manipulatorsystem dargestellt, welches einen Manipulator 20 umfasst. Der Manipulator 20 ist dabei mobil, kann also im Raum bewegt werden. Hierzu ist der Manipulator 20 mit einer entsprechenden mobilen Plattform versehen. Ferner kann der Manipulator 20 seine Achsen ansteuern, um seine Pose bzw. seine Konfiguration zu ändern. Die Bewegung des Manipulators 20 wird dabei durch eine Steuerung 21 gesteuert, die an dem Manipulator 20 bereitgestellt ist. Der Manipulator 20 kann auch stationär eingesetzt werden.

Ferner umfasst das Manipulatorsystem ein Bediengerät 10, welches insbesondere als Handbediengerät ausgestaltet sein kann. Dieses Bediengerät 10 ist eingerichtet, um den Manipulator 20 zu steuern. Hierzu umfasst das Bediengerät 10 eine Steuereinrichtung 11, welche Benutzereingaben erkennen kann und in direkter Kommunikation mit der Steuerung 21 des Manipulators steht. Durch diese Verbindung können Informationen zwischen der Steuerung 21 des Manipulators 20 und der Steuereinrichtung 11 des Bediengeräts 10 ausgetauscht werden.

In den Figuren 2-11 ist ein Bediengerät 10 dargestellt, welches dem Bediengerät 10 der Figur 1 entsprechen kann. Der Aufbau des Bediengeräts 10 der Figuren 2-11 ist einheitlich. Die in den Figuren 2-11 dargestellten Situationen unterscheiden sich hauptsächlich in der signalisierten Manipulator-Information im Sinne der vorliegenden Erfindung. Das Bediengerät 10 umfasst dabei, unter Bezugnahme auf Figur 2, einen Griff 12, an welchem ein Bediener das Bediengerät 10 halten kann. Ferner umfasst das Bediengerät 10 einen Joystick 13, welcher zumindest in der horizontalen Ebene auslenkbar ist, um Bewegungen des Manipulators 20 vorzugeben. Auch kann der Joystick 13 verwendet werden, um eine Dateneingabe bzw. Menüeingabe an dem Bediengerät 10 zu tätigen. Um den Joystick herum ist eine Informationsanzeige 14 bereitgestellt, welche einen segmentierten Leuchtring 15 und einem Ambiente-Lichtring 16 umfasst. Die einzelnen Segmente des Leuchtrings 15 sind unabhängig voneinander ansteuerbar. Ferner können die einzelnen Segmente des Leuchtrings 15 in verschiedenen Farben leuchten (z.B. grün, gelb, rot, blau). Auch der Ambiente-Lichtring 16 kann als Ganzes in verschiedenen Farben leuchten (z.B. grün, gelb, rot, blau). Zudem ist an dem Bediengerät 10 ferner ein Display 17 bereitgestellt, zumindest ein betätigbarer Schalter 18 als auch ein Notstopp 19.

In der in Figur 2 dargestellten Situation wird keine Benutzereingabe getätigt. Der Manipulator 20 befindet sich in seiner Roboter- bzw. Manipulatorzelle, und die Informationsanzeige stellt den Status der Zelle da. Hierzu wird jedes Segment des Leuchtrings 15 angesteuert, um grün zu leuchten, und auch der Ambientlichtring 16 leuchtet grün. Dadurch kann der Bediener erkennen, dass die Zelle gesperrt und nicht zugänglich ist. Ebenfalls erkennt der Bediener anhand der grünen Farbe, dass ein Programmablauf gegenwärtig problemfrei läuft. Das Display 17 kann hierzu weitere Informationen bereitstellen.

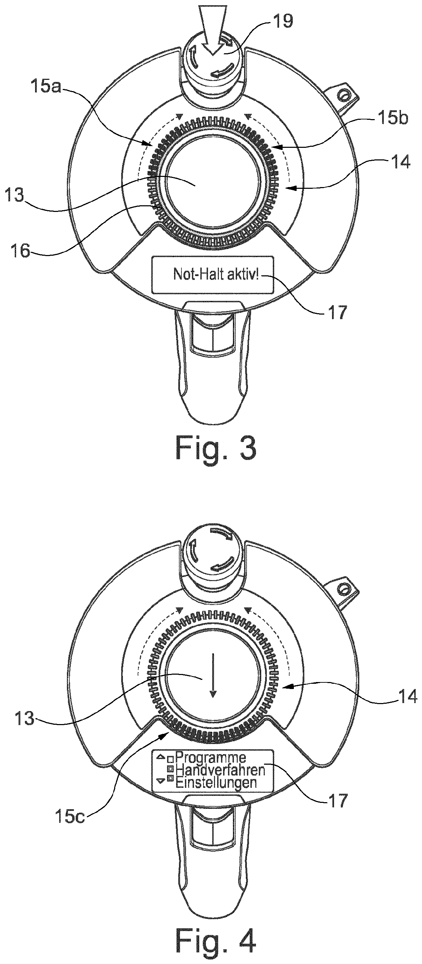

In der in Figur 3 dargestellten Situation wurde der Notstopp 19 gedrückt. In Reaktion hierzu werden die Segmente des Leuchtrings 15 derart angesteuert, dass zwei Bereiche von laufenden Lichtern 15a, 15b in gelb-roter Farbe auf den eingedrückten Notstopp 19 hinweisen. Ferner leuchtet der Ambiente-Lichtring 16 in roter Farbe. Auf dem Display 17 wird ferner angezeigt, dass der Notstopp aktiviert ist.

In der in Figur 4 dargestellten Situation wird die Informationsanzeige verwendet, um eine Menüführung des Bediengeräts 10 zu unterstützen. Im vorliegenden Fall wird ein Menü im Display 17 dargestellt, und der Bereich 15c des Leuchtrings 15 zeigt an, dass der Joystick 13 nach unten ausgelenkt wird, um im Menü nach unten zu fahren. Somit erhält der Bediener sofortiges Feedback zu seinen Eingaben. Ferner kann somit auch angezeigt werden, dass der Joystick 13 momentan zur Menüführung eingesetzt wird, und nicht, um eine Bewegungsvorgabe zu tätigen.

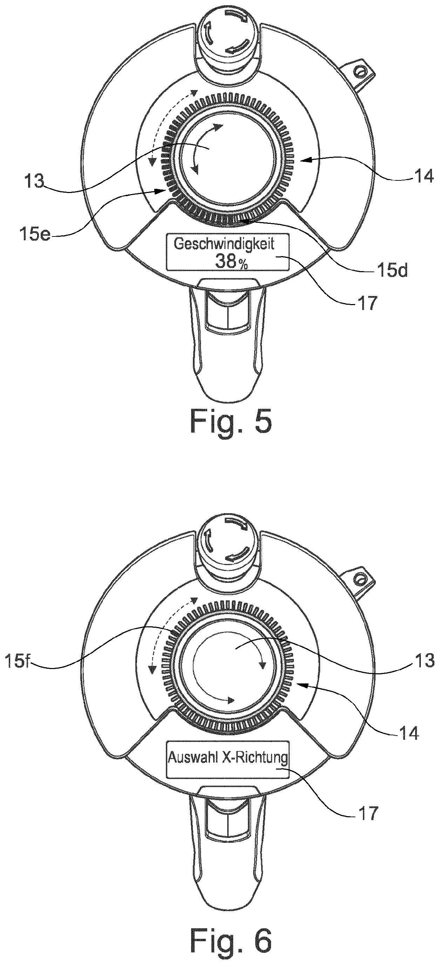

In der in Figur 5 dargestellten Situation wird ein Parameter des Manipulators 20 geändert, indem der Joystick 13 entsprechend der dargestellten Pfeilrichtung gedreht wird. In der Informationsanzeige 14 leuchtet ein Bereich 15e des Leuchtrings, welcher die Größe des aktuell gewählten Parameters visualisiert bzw. signalisiert. Der Bereich 15d, welcher zusätzlich auf dem Leuchtring visuell hervorgehoben ist, vermittelt dem Bediener die Grenzen des Bereichs. Dabei wird vorliegend zumindest die Position des Nullwerts des Parameters dargestellt. Somit erkennt der Bediener direkt, dass der aktuell gewählte Parameter in etwa 1/3 seines Maximalwerts entspricht. Auf dem Display 17 ist ferner der präzise numerische Wert des aktuellen Parameters, z.B. "Geschwindigkeit 38 %", dargestellt.

In der in Figur 6 dargestellten Situation soll der Manipulator 20 im Basiskoordinatensystem manuell bewegt werden. Durch Verdrehen des Joysticks 13 entsprechend der dargestellten Pfeilrichtung kann gewählt werden, welche Auslenkrichtung des Joysticks 13 beispielsweise der x-Achse des Manipulators 20 entsprechen soll. Beim Drehen des Joysticks 13 bewegt sich dabei ein Leuchtsegment 15f scheinbar "mit", indem die einzelnen Segmente des Leuchtrings 15 entsprechend angesteuert werden. So kann der Bediener direkt erkennen, welche Auslenkrichtung aktuell gewählt ist und mit der x-Achse des Manipulators assoziiert ist. Durch Drücken auf den Joystick 13 kann diese eindeutige Achszuordnung bestätigt werden. Dadurch sind auch die anderen Raumrichtungen definiert, wobei die z-Achse als Vertikale gegeben ist. Im Display 17 ist ferner angezeigt, dass aktuell die x-Richtung mit dem Bediengerät 10 ausgewählt bzw. eingestellt wird.

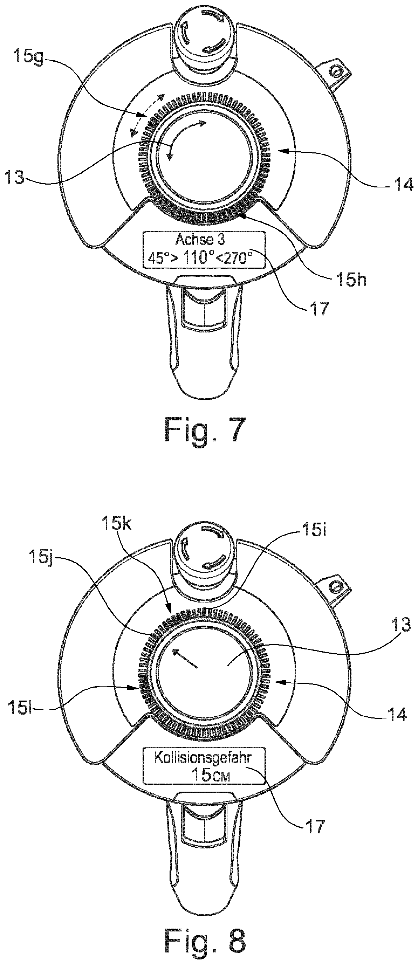

In der in Figur 7 dargestellten Situation soll eine einzelne Achse des Manipulators 20 verfahren bzw. gedreht werden. Hierzu wird der Joystick 13 entsprechend der dargestellten Pfeilrichtung gedreht, wodurch sich der aktuelle Achswinkel der einzelnen Achse verändert. Der dargestellte Bereich 15g der Informationsanzeige 14 zeigt dabei den aktuellen Achswert an, während der hervorgehobene Bereich 15h der Informationsanzeige 14 einen verbotenen Achsbereich darstellt, welcher durch individuelle Achsgrenzen begrenzt sein kann. Der Bediener erkennt somit sofort, in welchen Grenzen er den Achswinkel verändern kann. Zusätzlich ist auf dem Display 17 der numerische Wert des aktuellen Achswinkels als auch die Grenzen dargestellt (z.B. 45° > 110° < 270°). Bei Annähern an die Achsgrenzen könnte durch zusätzliches Blinken der Informationsanzeige vor einem möglichen Überschreiten der Achsgrenze gewarnt werden.

In der in Figur 8 dargestellten Situation wird der mobile Manipulator 20 im Raum verfahren. Durch Drehen des Joysticks oder Bewegen des Joysticks 13 kann die gewünschte Fahrtrichtung vorgegeben werden, welche visuell durch das Segment 15j dargestellt wird. Das Segment 15i zeigt dabei die aktuelle Fahrzeugausrichtung an. Diese kann dabei relativ zum Joystick angezeigt werden. Zusätzlich werden in der Informationsanzeige 14 mögliche Hindernisse relativ zu dem Manipulator 20 angezeigt, welche basierend auf Abstandsmessungen durch den Manipulator ermittelt worden sind. Dabei zeigt Bereich 15k ein kritisches Hindernis, welches sich links vor dem mobilen Manipulator befindet. Aufgrund der möglichen Kollisionsgefahr ist dieser Bereich 15k rot dargestellt. Ferner zeigt ein anderer Bereich 15l ein unkritisches Hindernis links neben dem Fahrzeug in grüner Farbe an, für welches momentan keine Kollisionsgefahr besteht. Für die rechte Seite des Fahrzeugs wurden keine Hindernisse erkannt. Auf dem Display 17 kann dabei der Abstand des Manipulators 20 zu dem kritischen Hindernis angezeigt werden, welcher im vorliegenden Beispiel 15 cm beträgt. Alternativ könnten vier Bereiche unterschiedlich angesteuert werden, um symbolisch die Umgebung des Fahrzeugs widerzuspiegeln. Wenn keine Kollisionsgefahr droht, kann jeder Bereich grün leuchten. Wenn die Farbe eines der Bereiche von grün über gelb nach rot leuchtend wechselt, und schließlich der Bereich blinkt, kann somit signalisiert werden, dass ein Hindernis erkannt wurde und die Kollisionsgefahr steigt.

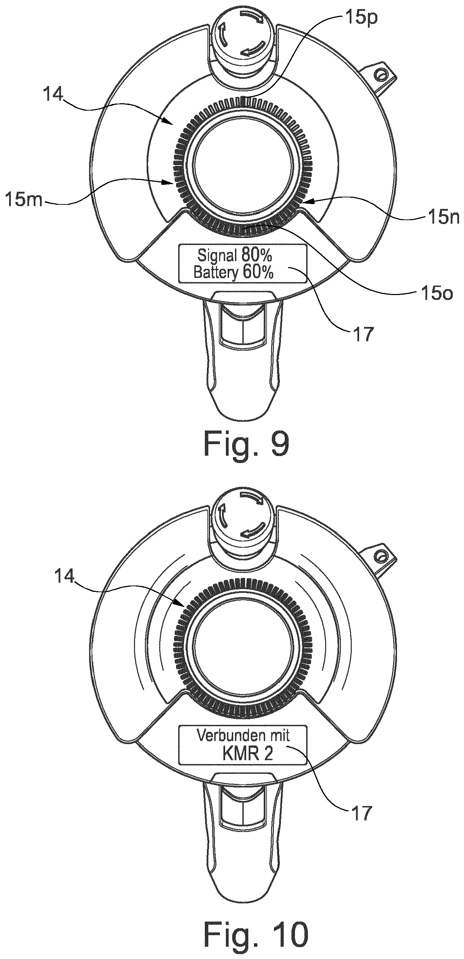

In der in Figur 9 dargestellten Situation werden Informationen zum Akkustand (z.B. des Bediengeräts 10 oder auch des Manipulators 20) und zur Signalstärke der Funkverbindung dargestellt. Dabei zeigt der blaue Bereich 15m die Signalstärke, während der gelbe Bereich 15n die aktuelle Kapazität des Akkus darstellt. Die in weiß leuchtenden Segmente 150 und 15p zeigen jeweils den minimalen bzw. maximalen Wert an und trennen die verschiedenen Informationen optisch voneinander. Zusätzlich ist auf dem Display 17 der jeweils numerische Wert (80 % bzw. 60 %) dargestellt.

In der in Figur 10 dargestellten Situation wird eine Pairing-Kontrolle durchgeführt. Beispielsweise durch Betätigen des Schalters 18 wird ein Signal an den aktuell zugeordneten Manipulator 20 gesendet, so dass dieser blinkt. Das Blinken des Manipulators 20 geschieht dabei synchron zu einem Blinken der Informationsanzeige 14, bzw. aller Segmente des Leuchtrings 15, so dass der Bediener erkennen kann, welcher Manipulator dem Bediengerät 10 zugeordnet ist. Ferner wird auf dem Display 17 dargestellt, mit welchem Manipulator das Bediengerät verbunden ist ("verbunden mit KMR 2").

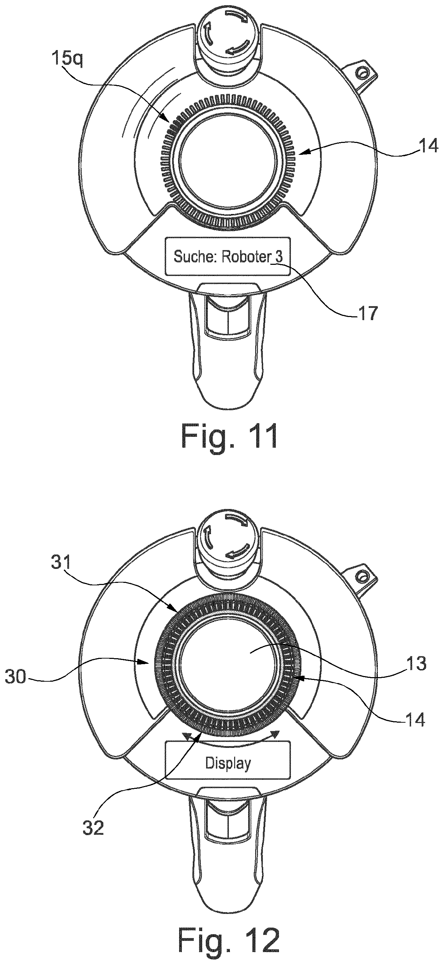

In der in Figur 11 dargestellten Situation wird mittels der Informationsanzeige 14 dargestellt, wo sich der Manipulator 20 relativ zu dem Bediengerät 10 befindet. Hierfür ist das Bediengerät 10 mit Lage- und/oder Orientierungssensorik ausgestattet. Unter Berücksichtigung dieser Sensordaten und entsprechender Ortsinformationen des Manipulators 20 wird der Bereich 15q des Leuchtrings 15 angesteuert, sodass der Bediener direkt erkennt, wo sich der Manipulator 20 befindet (hier: vorne links, relativ zu dem Bediengerät).

Das in Figur 12 dargestellte Bediengerät 10 ist analog zu den unter Bezugnahme auf Figur 2 beschriebenen Bediengerät 10 aufgebaut, umfasst jedoch zusätzlich einen Eingabering 30. Dieser Eingabering 30 ist um die Informationsanzeige 14 mit Ambiente-Leuchtring 16 und Leuchtring 15, und um den Joystick 13 herum bereitgestellt. Durch Drehen des Eingaberings 30 kann der Benutzer eine Eingabe tätigen, etwa um eine Menüführung oder eine Bewegung des Manipulators 20 zu steuern. Der obere Teil 31 des Eingaberings 30 ist dabei versenkt, und nicht direkt durch den Bediener erreichbar. Der untere Teil 32 des Eingaberings 30 ist offen, und zumindest seitlich zugänglich. Der Fachmann versteht, dass das in Figur 12 dargestellte Bediengerät 10 jede der oben beschriebenen Funktionen aufweisen kann.

Die vorliegende Erfindung ermöglicht somit eine Vielzahl an benutzerfreundlichen und intuitiven Bedienmöglichkeiten, und das Bediengerät 10 weist ein innovatives zentrales Bedieninterface auf. Sowohl die Bedienelemente als auch die Anzeigeelemente werden auf eine kompakte Einheit reduziert, und bilden das Zentrum der Interaktion mit dem Manipulator. Abhängig von der jeweiligen Situation wird dem Bediener das entsprechende Feedback signalisiert.

### Bezugszeichenliste:

- 10: Bediengerät
- 11: Steuereinrichtung
- 13: Joystick
- 14: Informationsanzeige
- 15: Leuchtring
- 16: Ambiente-Lichtring
- 17: Display
- 18: Schalter
- 19: Notstopp
- 20: Manipulator
- 21: Steuerung
- 30: Eingabering
- 31, 32: Teil des Eingaberings

## Patentansprüche

1. Verfahren zum Signalisieren von Manipulator-Information an einen Bediener eines Bediengeräts (10) zum Steuern oder Programmieren eines Manipulators (20) mit mehreren voneinander unabhängigen Freiheitsgraden, wobei das Bediengerät (10) aufweist:
Einen Handsteuerhebel (13), welcher eingerichtet ist, um zumindest eine zweidimensionale Bewegung des Manipulators (20) vorzugeben;
eine dem Handsteuerhebel (13) zugeordnete Informationsanzeige (14), welche eingerichtet ist, um Manipulator-Information visuell an einen Bediener des Bediengeräts (10) zu signalisieren, wobei die Informationsanzeige (14) mehrere unabhängig voneinander ansteuerbare Anzeigesegmente umfasst und wobei die Anzeigesegmente den Handsteuerhebel (13) zumindest teilweise umgeben; und
eine Steuereinrichtung, die eingerichtet ist, die Anzeigesegmente der Informationsanzeige (14) einzeln anzusteuern, um die Manipulator-Information zu signalisieren,
wobei die Anzeigesegmente gleichförmig sind und gleichmäßig um den Handsteuerhebel (13) herum bereitgestellt sind,
mit den folgenden Schritten:
Bereitstellen der Manipulator-Information, welche visuell an den Bediener des Bediengeräts (10) zu signalisieren ist, und
Ansteuern der Anzeigesegmente der Informationsanzeige (14), um die Manipulator-Information visuell zu signalisieren,
wobei die Manipulator-Information einen aktuellen Winkel einer Achse des Manipulators (20) und einen Grenzwinkel der Achse beschreibt, und das Ansteuern der Anzeigesegmente derart erfolgt, dass dem Bediener der aktuelle Winkel der Achse und ein zulässiger und unzulässiger Winkelbereich der Achse signalisiert werden,
wobei der Bediener durch Bedienung des Handsteuerhebels (13) den aktuellen Winkel der Achse des Manipulators (20) steuern kann.

2. Verfahren nach Anspruch 1, wobei die Manipulator-Information eine Richtung einer Koordinatenachse des Manipulators (20) beschreibt, und wobei das Ansteuern der Anzeigesegmente derart erfolgt, dass die Richtung der Koordinatenachse an den Bediener signalisiert wird,
wobei der Bediener durch Bedienung des Handsteuerhebels (13) die Richtung der Koordinatenachse des Manipulators (20) steuern kann.

3. Verfahren nach Anspruch 1 oder 2, wobei die Manipulator-Information eine aktuelle Ausrichtung des Manipulators und ein Hindernis in der Umgebung des Manipulators (20) beschreibt, und das Ansteuern der Anzeigesegmente derart erfolgt, dass dem Bediener die aktuelle Ausrichtung des Manipulators (20) und ein durch das Hindernis belegter Bereich signalisiert werden,
wobei der Bediener durch Bedienung des Handsteuerhebels (13) die aktuelle Ausrichtung des Manipulators (20) steuern kann.

4. Verfahren nach einem der Ansprüche 1-3, wobei die Manipulator-Information zumindest eines der folgenden umfasst oder beschreibt:
- Örtliche und/oder zeitliche Information zu der zweidimensionalen Bewegung des Manipulators (20),
- Örtliche und/oder zeitliche Information zu einer Achskonfiguration des Manipulators (20),
- Information zu einem Parameterwert und/oder einem Parameterlimit des Manipulators (20),
- Information zu dem Koordinaten- oder Bezugssystem des Manipulators (20),
- Information zu einer Achsgrenze des Manipulators (20),
- Umgebungsinformation zu dem Manipulator (20),
- Information zu einem Zustand des Manipulators (20).

5. Verfahren nach einem der Ansprüche 1-4, wobei das Bediengerät (10) Anzeigesegmente aufweist, die den Handsteuerhebel (13) an zumindest drei Seiten umgeben.

6. Verfahren nach einem der Ansprüche 1-5, wobei die Informationsanzeige (14) den Handsteuerhebel (13) ringförmig umgibt.

7. Verfahren nach einem der Ansprüche 1-6, wobei die Informationsanzeige (14) einen segmentierten Leuchtrings (15) umfasst, welcher die mehreren Anzeigesegmente umfasst, wobei die Informationsanzeige (14) vorzugsweise ferner einen Ambiente-Lichtring (16) umfasst.

8. Verfahren nach einem der Ansprüche 1-7, wobei die Anzeigesegmente den Handsteuerhebel (13) kontinuierlich umgeben.

9. Verfahren nach einem der Ansprüche 1-8, wobei das Bediengerät (10) als eine 2D-, 3D- oder 6D-Maus ausgebildet ist, und/oder wobei der Handsteuerhebel (13) als Joystick (13) und vorzugsweise als 2D-, 3D- oder 6D-Joystick ausgebildet ist, welcher insbesondere vorzugsweise als Kappen- oder Ball-Joystick ausgebildet ist.

10. Verfahren nach einem der Ansprüche 1-9, wobei die Informationsanzeige (14) zumindest 4, vorzugsweise zumindest 8, weiter vorzugsweise zumindest 16, weiter vorzugsweise zumindest 32, weiter vorzugsweise zumindest 64 und am meisten bevorzugt zumindest 100 Anzeigesegmente umfasst.

11. Verfahren nach einem der Ansprüche 1-10, ferner aufweisend einen Lagesensor und/oder Orientierungssensor, um eine Lage und/oder Orientierung des Bediengeräts (10) zu ermitteln, und wobei die Steuereinrichtung weiter eingerichtet ist, um die Anzeigesegmente der Informationsanzeige (14) unter Berücksichtigung der ermittelten Lage und/oder Orientierung des Bediengeräts anzusteuern.

12. Verfahren nach einem der Ansprüche 1-11, wobei um den Handsteuerhebel (13) herum ein Eingabering (30) bereitgestellt ist, welcher drehbar betätigbar ist um eine Benutzereingabe zu erfassen.

## Claims

1. Method for signaling manipulator information to an operator of a control device (10) for controlling or programming of a manipulator (20) with several mutually independent degrees of freedom, the control device (10) comprising:
- A hand control lever (13) which is set up to specify at least a two-dimensional movement of the manipulator (20) ;
- an information display (14) assigned to the hand control lever (13), which is set up to visually signal manipulator information to an operator of the operating device (10), wherein the information display (14) comprising several independently controllable display segments and wherein the display segments surround at least partially the hand control lever (13); and
- a control device which is set up to individually control the display segments of the information display (14) in order to signal the manipulator information,
- wherein the display segments are uniform and are provided uniformly around the hand control lever (13), with the following steps:
- Providing the manipulator information, which is to be visually signaled to the operator of the operating device (10), and
- Controlling the display segments of the information display (14) in order to visually signal the manipulator information,
wherein the manipulator information describes a current angle of an axis of the manipulator (20) and a limit angle of the axis, and the control of the display segments takes place in such a way that the current angle of the axis and a permissible and impermissible angle range of the axis are signaled to the operator, whereby the operator can control the current angle of the axis of the manipulator (20) by operating the manual control lever (13).

2. Method according to claim 1, wherein the manipulator information describes a direction of a coordinate axis of the manipulator (20), and wherein the control of the display segments takes place in such a way that the direction of the coordinate axis is signaled to the operator, wherein the operator can control the direction of the coordinate axis of the manipulator (20) by operating the manual control lever (13).

3. Method according to claim 1 or 2, wherein the manipulator information describes a current alignment of the manipulator and an obstacle in the vicinity of the manipulator (20), and the control of the display segments takes place in such a way that the operator receives the current alignment of the manipulator (20) and an area occupied by the obstacle is signaled, wherein the operator can control the current alignment of the manipulator (20) by operating the manual control lever (13).

4. Method according to one of claims 1-3, wherein the manipulator information comprises or describes at least one of the following:
- Local and / or temporal information on the two-dimensional movement of the manipulator (20),
- Local and / or temporal information on an axis configuration of the manipulator (20),
- Information on a parameter value and / or a parameter limit of the manipulator (20),
- Information on the coordinate or reference system of the manipulator (20),
- Information on an axis limit of the manipulator (20),
- Environment information about the manipulator (20),
- Information on a state of the manipulator (20).

5. Method according to one of Claims 1 to 4, the operating device (10) having display segments which surround the manual control lever (13) on at least three sides.

6. Method according to one of Claims 1-5, wherein the information display (14) surrounds the manual control lever (13) in an annular manner.

7. Method according to one of claims 1-6, wherein the information display (14) comprises a segmented light ring (15) which comprises the plurality of display segments, wherein the information display (14) preferably further comprises an ambient light ring (16).

8. Method according to one of claims 1-7, wherein the display segments continuously surround the manual control lever (13).

9. Method according to one of claims 1-8, wherein the operating device (10) is designed as a 2D, 3D or 6D mouse, and / or wherein the manual control lever (13) as a joystick (13) and preferably as a 2D, 3D - Or 6D joystick is designed, which is particularly preferably designed as a cap or ball joystick.

10. Method according to one of claims 1-9, wherein the information display (14) comprises at least 4, preferably at least 8, more preferably at least 16, more preferably at least 32, more preferably at least 64 and most preferably at least 100 display segments.

11. The method according to one of claims 1-10, further comprising a position sensor and / or orientation sensor to determine a position and / or orientation of the operating device (10), and wherein the control device is further set up to display the display segments of the information display (14) Into consideration of the determined position and / or orientation of the operating device.

12. The method according to any one of claims 1-11, wherein an input ring (30) is provided around the hand control lever (13), which input ring (30) can be rotatably actuated in order to detect a user input.

## Revendications

1. Procédé de signalisation d'informations de manipulateur à un opérateur d'un dispositif de commande (10) pour commander ou programmer un manipulateur (20) avec plusieurs degrés de liberté mutuellement indépendants, le dispositif de commande (10) comprenant:
- Un levier de commande manuelle (13) qui est configuré pour spécifier au moins un mouvement bidimensionnel du manipulateur (20);
- un affichage d'informations (14) affecté au levier de commande manuelle (13), qui est configuré pour signaler visuellement les informations du manipulateur à un opérateur du dispositif de commande (10), dans lequel l'affichage d'informations (14) comprend plusieurs segments d'affichage contrôlables indépendamment et dans lequel les segments d'affichage entourent au moins partiellement le levier de commande manuelle (13); et-un dispositif de commande qui est configuré pour commander individuellement les segments d'affichage de l'affichage d'informations (14) afin de signaler les informations du manipulateur,
- dans lequel les segments d'affichage sont uniformes et sont disposés uniformément autour du levier de commande manuelle (13), avec les étapes suivantes:
- Fournir les informations sur le manipulateur, qui doivent être signalées visuellement à l'opérateur du dispositif de commande (10), et
- Commande des segments d'affichage de l'affichage d'informations (14) afin de signaler visuellement les informations du manipulateur,
dans lequel les informations du manipulateur décrivent un angle courant d'un axe du manipulateur (20) et un angle limite de l'axe, et la commande des segments d'affichage a lieu de telle manière que l'angle courant de l'axe et une valeur admissible et non admissible la plage angulaire de l'axe est signalée à l'opérateur, ce par quoi l'opérateur peut contrôler l'angle actuel de l'axe du manipulateur (20) en actionnant le levier de commande manuelle (13).

2. Procédé selon la revendication 1, dans lequel les informations de manipulateur décrivent une direction d'un axe de coordonnées du manipulateur (20), et dans lequel la commande des segments d'affichage a lieu de telle manière que la direction de l'axe de coordonnées est signalée à l'opérateur. , dans lequel l'opérateur peut contrôler la direction de l'axe de coordonnées du manipulateur (20) en actionnant le levier de commande manuelle (13).

3. Procédé selon la revendication 1 ou 2, dans lequel les informations du manipulateur décrivent un alignement actuel du manipulateur et un obstacle à proximité du manipulateur (20), et la commande des segments d'affichage a lieu de telle manière que l'opérateur reçoit l'alignement actuel du manipulateur (20) et une zone occupée par l'obstacle est signalé, l'opérateur pouvant commander l'alignement actuel du manipulateur (20) en actionnant le levier de commande manuelle (13).

4. Procédé selon l'une des revendications 1 à 3, dans lequel les informations du manipulateur comprennent ou décrivent au moins l'un des éléments suivants:
- Des informations locales et / ou temporelles sur le mouvement bidimensionnel du manipulateur (20),
- Locales et / ou temporelles des informations sur une configuration d'axe du manipulateur (20),
- des informations sur une valeur de paramètre et / ou une limite de paramètre du manipulateur (20),
- des informations sur le système de coordonnées ou de référence du manipulateur (20),
- des informations sur un axe limite du manipulateur (20),
- informations d'environnement sur le manipulateur (20),
- informations sur un état du manipulateur (20).

5. Procédé selon l'une des revendications 1 à 4, le dispositif de commande (10) ayant des segments d'affichage qui entourent le levier de commande manuelle (13) sur au moins trois côtés.

6. Procédé selon l'une des revendications 1 à 5, dans lequel l'affichage d'informations (14) entoure le levier de commande manuelle (13) d'une manière annulaire.

7. Procédé selon l'une des revendications 1 à 6, dans lequel l'affichage d'informations (14) comprend un anneau lumineux segmenté (15) qui comprend la pluralité de segments d'affichage, dans lequel l'affichage d'informations (14) comprend en outre de préférence un anneau lumineux ambiant (16).

8. Procédé selon l'une des revendications 1 à 7, dans lequel les segments d'affichage entourent en continu le levier de commande manuelle (13).

9. Procédé selon l'une des revendications 1 à 8, dans lequel le dispositif de commande (10) est conçu comme une souris 2D, 3D ou 6D, et / ou dans lequel le levier de commande manuelle (13) comme un joystick (13) et de préférence comme un 2D , 3D - ou joystick 6D est conçu, qui est de préférence conçu comme un joystick cap ou boule.

10. Procédé selon l'une des revendications 1 à 9, dans lequel l'affichage d'informations (14) comprend au moins 4, de préférence au moins 8, plus préférablement au moins 16, plus préférablement au moins 32, plus préférablement au moins 64 et le plus préférablement au moins 100 segments d'affichage.

11. Procédé selon l'une des revendications 1 à 10, comprenant en outre un capteur de position et / ou un capteur d'orientation pour déterminer une position et / ou une orientation du dispositif de commande (10), et dans lequel le dispositif de commande est en outre configuré pour afficher l'affichage. segments de l'affichage d'informations (14) en tenant compte de la position et / ou de l'orientation déterminées du dispositif de commande.

12. Procédé selon l'une quelconque des revendications 1 à 11, dans lequel une bague d'entrée (30) est prévue autour du levier de commande manuelle (13), laquelle bague d'entrée (30) peut être actionnée de manière rotative afin de détecter une entrée d'utilisateur.
